# EUROPÄISCHE PATENTANMELDUNG

(11) **EP 0 726 140 A1**
(43) Veröffentlichungstag der Anmeldung: **14.08.1996**
(21) Anmeldenummer: 96100109.6
(22) Anmeldetag: 05.01.1996
(51) Int. Cl.: B32B 5/22, B60J 7/12

(54) **Verdeck für Fahrzeuge, insbesondere Cabriolets**

(30) Priorität: 03.02.1995 DE 19503428
(71) Anmelder: Gebr. Happich GmbH, 42097 Wuppertal (DE)
(72) Erfinder: Baader, Hans-Joachim, D-42329 Wuppertal (DE); Nockemann, Hans, D-42111 Wuppertal (DE); Schwarz, Bruno, Dr., D-64643 Oberlaudenbach (DE)

(57) **Zusammenfassung**

Verdeck für Fahrzeuge, insbesondere Cabriolets mit einem Verdeckstoff aus einem Obergewebe, einem Unterstoff, einer dazwischen angeordneten Gummierung, ggf. einer unterhalb des Verdeckstoffs anzuordnenden Dachinnenverkleidung und einer am Unterstoff und/oder an der Oberseite der Dachinnenverkleidung angeordneten Schutzschicht aus einer Maschenware aus schnittfesten Fasern wie aromatischen Polyamidfasern, nach dem Gelspinnverfahren ersponnenen Polyethylenfasern oder Glasfasern, einem Draht in mindestens einem Fadensystem der Maschenware und einer wenigstens einseitig auf die Schutzschicht aufgebrachten textilen Vliesschicht.

## Beschreibung

Die Erfindung betrifft ein diebstahl- und/oder vandalismusgesichertes Verdeck für Fahrzeuge, insbesondere Cabriolets.

In der EP-B1 0 377 813 derselben Anmelderin ist ein Verdeckstoff für Fahrzeuge, insbesondere Cabriolets beschrieben, der diebstahl- und/oder vandalismusgesichert ist und aus einem Obergewebe, einem Untergewebe und einer dazwischen angeordneten Gummierung besteht, wobei das Obergewebe aus aus Polyacrylnitril bestehenden Kett- und Schußfäden gebildet ist, zumindest die Kettfäden des Obergewebes aus Endlosfäden (Multifilaments) bestehen, das Obergewebe eine zumindest gewebeoberseitige Beschichtung aufweist, die Gummierung zwischen Obergewebe und Unterstoff zweischichtig ausgeführt ist und zwischen den Gummierungsschichten eine Zwischenlage aus im Vergleich zu den Gummierungsschichten hochfestem Material eingebettet ist. Diese Zwischenlage aus hochfestem Material kann aus Fasern oder Fäden aus Aramid, Kohlenstoff, Glas, Stahl oder hochverstrecktem Polyethylen bestehen, wobei die Zwischenlage aus einem Gittergewebe bestehen kann, deren Kett- und Schußfäden in einem Winkel zwischen 30° und 60°, vorzugsweise 45° zur Gewebelängsachse verlaufen. Die Zwischenlage aus hochfestem Material reicht nicht in allen Fällen aus, eine diebstahl- oder Vandalismussicherung zu gewährleisten.

Zur Verhinderung oder mindestens zur Erschwerung des Vandalismus wurden für Fahrzeugsitze bereits mehrere verschiedene Problemlösungen vorgeschlagen.

So wird in DE-A 3 702 639 angeregt, ein feinmaschiges Metallgewebe zwischen dem Sitzbezug-Oberstoff und den den Sitzkörper bildendem Schaumstoff anzubringen. Eine ähnliche Problemlösung wird in GB-A 2 204 235 vorgeschlagen.

Gestricke aus Draht oder aus Metallfasern werden in DE-U 90 04 625 und EP-A 190 064 beschrieben.

Grundsätzlich bilden derartige Ausrüstungen auch bei Verdeckstoffen eine Diebstahl- und/oder Vandalismussicherung.

Flächengebilde aus Metalldrähten oder Metallfasern haben als Schutzschicht bei Verdeckstoffen erhebliche Nachteile, die sich sowohl bei der Verarbeitung als auch besonders im Gebrauch äußern. Diese Schutzschichten sind üblicherweise, wie bereits mit Bezug auf die EP-B1 0 377 813 erläutert, unter dem Obergewebe angeordnet, da sie nur an dieser Stelle, ohne dem Benutzer und dem Schädiger aufzufallen, ihre Schutzwirkung entfalten können.

Solche Flächengebilde aus Metalldrähten und Metallfasern sind wegen ihrer geringen Flexibilität verhältnismäßig schlecht verarbeitbar, da vor allem beim Überbrücken nicht ebener Flächen, was bei der Herstellung von Cabrioletverdecken in eine hohen Maß erforderlich ist, zusätzliche Schneid- bzw. Einschneidvorgänge, die sich negativ auf die Produktionskosten auswirken, erforderlich sind.

Die Nachteile von Diebstahl- und/oder Vandalismus-Schutzschichten aus Metalldrähten oder Metallfasern zeigen sich besonders im Gebrauch. Durch solche Schutzschichten wird der Komfort beim Öffnen und Schließen des Cabrioletverdeck erheblich beeinflußt, da durch diese Einlagen ein härterer und steiferer Verdeckstoff entsteht.

Besonders problematisch ist jedoch das im Gebrauch immer wieder vorkommende Herauslösen einzelner, abgerissener Drähte. Diese durchstechen dann den eigentlichen Bezug nach innen oder außen und stehen aus dem Verdeckstoff, oft nicht ausreichend wahrnehmbar, heraus. Dadurch können sich Benutzer des Fahrzeuges beim Öffnen und Schließen des Verdecks verletzen.

Um diese Nachteile zu vermeiden, wurden für Fahrzeugsitze daher bereits Vandalismus-Schutzschichten aus schnittfesten Textilfasern beschrieben. So wird in Au-A 86 - 52 272 vorgeschlagen, die Vandalismus-Schutzschicht aus einem Gewebe oder einem Nadelfilz aus aromatischen Polyamidfasern - Aramidfasern - zu bilden und diese Schicht mit dem Oberstoff zu verkleben. Einen Nadelfilz aus Aramidfasern als Vandalismus-Schutzschicht erwähnt auch EP-A 355 879.

Weder Gewebe noch Nadelfilze aus aromatischen Polyamidfasern ergeben jedoch bei Schneid- und Einstichversuchen die geforderte Schnitt- und Stichfestigkeit, so daß diese Problemlösungen zwar die Nachteile der Diebstahl- bzw. Vandalismus-Schutzschichten aus Metall nicht zeigen, aber bezüglich der Schnitt- und Stichfestigkeit die Forderungen an Diebstahl- bzw. Vandalismus-Schutzschichten nicht ausreichend erfüllen.

Zwei Antivandalismuslagen, nämlich eine aus einem Metallgitter und eine zweite aus Aramidfasern, werden in FR-A 2 592 334 beschrieben. Hier werden zwar die obengenannten Nachteile etwas verringert, aber die Gefahr der Verletzung durch herausstehende Drähte und der Nachteil der schlechteren Verarbeitbarkeit von Vandalismus-Schutzschichten aus Metall bleiben bestehen. Dazu kommt, daß diese Problemlösung auch höhere Produktionskosten als bei der Verarbeitung einer einheitlichen Vandalismus-Schutzschicht verursacht.

Eine Schutzschicht, die aus unterschiedlichen Flächengebilden und aus sehr verschiedenen Materialien wie Glasfasern, Polyesterfasern, keramischen Fasern, aromatischen Polyamidfasern oder Kohlenstoffasern bestehen kann, erwähnt EP-A 512 382. Diese Fasermaterialien können in Form von Gittern, Netzen, Geweben oder Gewirken vorliegen. Diese Patentanmeldung vermittelt aber keine Lehre, wie eine solche Schutzschicht beschaffen sein muß, um einen ausreichenden Widerstand gegen Diebstahl und Vandalismus leisten zu können.

Der Erfindung liegt die Aufgabe zugrunde, ein Verdeck für Fahrzeuge, insbesondere Cabriolets, zur Verfügung zu stellen, das eine befriedigende Verarbeitbarkeit, hohe Stich- und Schnittbeständigkeit sowie geringe Verletzungsgefahr aufweist und somit eine kostengünstige Herstellung und Verarbeitung ermöglicht. Weiter besteht die Aufgabe darin, ein Verdeck zur Verfügung zu stellen, das eine Schwerentflammbarkeit oder Nichtbrennbarkeit aufweist, um auch den Forderungen nach flammhemmenden Eigenschaften des diebstahl- und/oder vandalismusgesicherten Verdecks gerecht werden zu können.

Ausgehend von dieser Aufgabenstellung wird ein Verdeck mit einem Verdeckstoff aus einem Obergewebe, einem Unterstoff sowie einer dazwischen angeordneten Gummierung, ggf. einer unterhalb des Verdeckstoffs anzuordnenden Dachinnenverkleidung und einer am Unterstoff und/oder einer an der Oberseite der Dachinnenverkleidung angeordneten Schutzschicht, die aus einer Maschenware aus schnittfesten Fasern, wie aromatischen Polyamidfasern, nach dem Gelspinnverfahren ersponnenen Polyethylenfasern oder Glasfasern, einem Draht in mindestens einem Fadensystem der Maschenware und einer wenigstens einseitig auf die Schutzschicht aufgebrachten textilen Vliesschicht besteht, vorgeschlagen.

Gegenüber den bisher für die Herstellung von Diebstahl- oder Vandalismus-Schutzschichten vorwiegend vorgeschlagenen Webwaren ergeben Maschenwaren, besonders auf Raschel- und Häkelgalonmaschinen hergestellte Maschenwaren, erhebliche Vorteile. Diese zeigen sich in der Schnittbeständigkeit und im Verarbeitungsverhalten.

Bei einem Schnittversuch mit einem Messer wirkt bei Webwaren das Schneidgerät bevorzugt senkrecht auf das Garn der Schutzschicht ein. Dies ist bei Maschenwaren, bedingt durch deren Konstruktion, nicht der Fall. Die senkrechte Einwirkung wird sich beim Ansetzen des Schneidgeräts hier nur als seltenes Ereignis ergeben. Die der durch das Schneidgerät einwirkenden Kraft entgegengesetzt parallel wirkende Kraftkomponente der Garne ist bei Geweben somit deutlich kleiner als bei Maschenwaren, wodurch sich ein besonderer Vorteil von Maschenwaren gegenüber Geweben ergibt. Wie Schneidversuche gezeigt haben, kann mit Maschenwaren eine deutlich höhere Schnittbeständigkeit erzielt werden als mit Geweben oder mit den ebenfalls für Vandalismus-Schutzschichten vorgeschlagenen Nadelfilzen.

Weitere deutliche Vorteile zeigen sich in den Verarbeitungseigenschaften von Maschenwaren im Vergleich zu Geweben. So ist es bekannt, daß bei der Herstellung von Geweben aus Aramidfasern erhebliche Festigkeitsverluste in Kauf genommen werden müssen, die bei unsachgemäßer Verarbeitung bis zu 50 % der Ausgangsfestigkeit betragen können. Diese Verschlechterung der Festigkeit bei der Gewebeherstellung ist mit ziemlicher Wahrscheinlichkeit auf die besonders an den Kreuzungspunkten von Kett- und Schußfäden auftretenden Abquetsch- und Scherbelastungen der Garne zurückzuführen. Bedingt durch die Verarbeitungstechnik und die Konstruktion von Maschenwaren sind diese Belastungen hier wesentlich geringer. Die Ausgangsfestigkeit der Aramidfasern bleibt also bei der Herstellung von Maschenwaren wesentlich besser erhalten als bei der Gewebeherstellung.

Als weiterer Vorteil der Maschenware gegenüber Geweben oder Nadelfilzen ist deren Flexibilität bei der Verarbeitung zu nennen. Dieser Vorteil macht sich bei der Herstellung von Cabrioletverdecken mit den hier üblichen Wölbungen und Rundungen positiv bemerkbar.

Durch die Beschichtung mit einer textilen Vliesschicht läßt sich die Schutzschicht unmittelbar mit dem Unterstoff des Verdeckstoffs und/oder der Oberseite der Dachinnenverkleidung verbinden, so daS die Schutzschicht demgegenüber eine gewisse Beweglichkeit behält. Dabei behalten der mit der Schutzschicht versehene Verdeckstoff und/oder die Dachinnenverkleidung im Grundsatz den textilen Charakter bei und lassen sich normal verarbeiten, da durch die Schutzschicht keine Verminderung der Elastizität und Dehnfähigkeit eintritt.

Wenngleich Stichverletzungen des Verdeckstoffs und/oder der Dachinnenverkleidung trotz der Schutzschicht immer noch möglich sind, wird ein Einschneiden und Lösen des Stoffs von der gegenkaschierten Schutzschicht erheblich erschwert, so daß sich keine aufklaffenden Textilenden ergeben und auch kein Aufreißen von Hand möglich ist. Ein weiterer Vorteil besteht darin, daß sich Einstiche oder andere Oberflächenbeschädigungen mit handelsüblichen Textilklebstoffen reparieren und/oder versiegeln lassen.

Vorzugsweise kann die Vliesschicht mit der Maschenware vernadelt sein, um eine Klebverbindung zwischen der Schutzschicht und der Vliesschicht zu vermeiden.

Ein für die Verarbeitung vorbereiteter Werkstoff für Cabrioletverdecke läßt sich durch eine mit der Vliesschicht verbundene, vorzugsweise verklebte Schicht aus einem Gewebe oder einer Folie herstellen, so daß sich dieses Material unmittelbar in üblicher Weise verarbeiten läßt.

Um die Antivandalismuswirkung bzw. die Wirkung als Diebstahlschutz zu erhöhen, kann auch die Vliesschicht aus schnittfesten Fasern, wie aromatischen Polyamidfasern, nach dem Gelspinnverfahren ersponnenen Polyethylenfasern oder Glasfasern bestehen.

Als schnittfeste Textilfasern sind für die Herstellung der Diebstahl- und Vandalismus-Schutzschicht aromatische Polyamidfasern besonders gut geeignet. Diese Fasern werden häufig auch als Aramidfasern bezeichnet. Ein weiterer wesentlicher Vorteil der Aramidfasern ist ihre geringe Brennbarkeit, so daß eine besondere Ausrüstung mit flammhemmenden Mitteln beim Einsatz dieser Faserart ggf. nicht erforderlich ist. Darüberhinaus besitzen aromatische Polyamidfasern auch sehr hohe Festigkeiten.

Außer aromatischen Polyamidfasern können Polyolefinfasern, besonders nach den Gelspinnverfahren hergestellte Polyethylenfasern, für die Herstellung der Diebstahl- und Vandalismus-Schutzschicht Verwendung finden. Diese haben allerdings, im Gegensatz zu Aramidfasern, nicht den Vorteil der geringen Brennbarkeit und sind somit in Einsatzgebieten, in denen diese Eigenschaft gefordert wird, nicht verwendbar.

Auch Glasfasern, die ebenso wie aromatische Polyamidfasern bezüglich der Nichtbrennbarkeit gute Voraussetzungen bieten, können zur Herstellung der erfindungsgemäßen Diebstahl- und Vandalismus-Schutzschicht Einsatz finden.

Aromatische Polyamidfasern, nach dem Gelspinnverfahren ersponnene Polyethylenfasern oder Glasfasern können in der Diebstahl- und Vandalismus-Schutzschicht entweder allein, als Mischungen dieser Fasern oder als Mischungen mit anderen Fasern Einsatz finden. Bei der Auswahl der Mischungspartner und der Mischungsverhältnisse ist allerdings darauf zu achten, daß die Schnittschutzeigenschaften und die Schwerentflammbarkeit nicht negativ beeinflußt werden. Bevorzugt wird der alleinige Einsatz einer schnittbeständigen Faser als Textilkomponente in der Diebstahl- und Vandalismus-Schutzschicht. Besonders bevorzugt wird der alleinige Einsatz von aromatische Polyamidfasern als schneidbeständige Textilfasern in der Diebstahl- und Vandalismus-Schutzschicht.

Die Titer der Garne, die für die Herstellung der erfindungsgemäßen Diebstahl- und Vandalismus-Schutzschicht Einsatz finden sollen, liegen in Bereichen zwischen 420 und 8500 dtex. Bevorzugt wird ein Bereich zwischen 1000 und 5000 dtex, besonders bevorzugt ein Bereich zwischen 1500 und 3500 dtex. Bei der Auswahl des Garntiters muß ein Mittelweg zwischen angestrebter Schnittbeständigkeit und Gebrauchskomfort eingeschlagen werden. Höhere Titer ergeben eine bessere Schnittbeständigkeit als niedrigere, im Hinblick auf den Bedienungskomfort sind aber niedrigere Titer den höheren vorzuziehen. Der Filamenttiter dieser Garne soll unter 5 dtex liegen, bevorzugt wird ein Titerbereich zwischen 0,5 und 3 dtex.

Die vorzugsweise beidseitig auf die Schutzschicht aufgebrachte Vliesschicht kann auf einer Seite mit einer dauerhaft klebfähigen Kleberschicht und einer abziehbaren Schutzfolie versehen sein, so daß sich die Schutzschicht getrennt von einer Deckschicht verarbeiten läßt. Dies ist insbesondere dann günstig, wenn die Schutzschicht mit der Deckschicht zu einem Cabrioletverdeck verarbeitet werden soll. In diesem Fall läßt sich die Schutzschicht fertig vorarbeiten und nach Abziehen der Schutzfolie mit dem vorgearbeiteten Verdeckstoff und/oder der Dachinnenverkleidung verkleben.

Die Kleberschicht läßt sich auf die Vliesschicht aufsprühen oder als doppelseitig klebende Folie aufbringen.

Eine weitere Verbesserung der Verarbeitungsfähigkeit der Schutzschicht unter einem Verdeckstoff oder oberhalb einer Dachinnenverkleidung läßt sich erreichen, wenn der Draht mindestens in einem aus der Ebene der Maschenware herausragenden Fadensystem enthalten ist, so daß die Schutzschicht trotz des eingelagerten Drahts eine ausreichende Flexibilität gewährleistet, die im Hinblick auf eine gute Schnittbeständigkeit besonders wichtig ist.

Für die Herstellung der erfindungsgemäßen Diebstahl- und Vandalismus-Schutzschicht kommt eine Maschenware, bevorzugt eine Kettenwirkware, besonders bevorzugt eine auf Raschel- oder Häkelgalonmaschinen hergestellte Maschenware, zum Einsatz. Das Flächengewicht dieser Ware kann zwischen 100 und 2000 g/m² liegen. Unter 100 g/m² kann eine ausreichende Schnittfestigkeit nicht mehr erreicht werden. Bevorzugt wird ein Bereich zwischen 200 und 1000 g/m², besonders bevorzugt wird ein Bereich zwischen 200 und 600 g/m². Versuche haben gezeigt, daß die geforderte Schnittfestigkeit im allgemeinen in einem Bereich von 300 - 400 g/m² gut erzielt werden kann. Da aber die Schnittfestigkeit noch von einigen anderen Eigenschaften, wie beispielsweise vom Garntiter abhängig ist, kann sich der Bereich von 300 - 400 g/m², je nach Art der verwendeten Garne, nach oben oder nach unten verschieben. Höhere Bereiche von 500 - 700 g/m² und besonders von 700 - 1000 g/m² können die Schnittfestigkeit deutlich weiter verbessern, sie sind aber aus wirtschaftlichen Gründen nicht immer realisierbar.

Bezüglich der Maschendichte haben sich Werte zwischen 1/cm und 20/cm als günstig erwiesen Bevorzugt wird ein Bereich von 2/cm bis 5/cm, in dem die gewünschte Schnittfestigkeit erzielt werden kann.

Um ein aus der Ebene der Maschenware herausragendes, einen Draht enthaltendes Fadensystem zu erhalten, werden beispielsweise zwischen die mittels Kurzschiene gelegten Maschenfäden, zum Beispiel aus Garnen aus aromatischen Polyamidfasern, mittels einer Langschiene Schußlegefäden aus aromatischen Polyamidfasern gelegt. Über diese werden mittels einer Figurschiene weitere Schußlegefäden, die einen ummaschten Draht enthalten, gelegt.

Diese drahthaltigen Fäden ragen aus der Ebene der Maschenware heraus.

Eine andere Möglichkeit ist, mit zwei Langschienen zu arbeiten und für die obere mittels Langschiene erzeugte Legung einen ummaschten Draht vorzusehen. Zusätzlich wird noch mittels Figurschiene ein weiterer ummaschter Draht über die Maschenfäden gelegt. Wesentlich ist hierbei, daß der Draht in den langen Fadenlegungen enthalten ist, da nur auf diese Weise eine gute Schnittfestigkeit erzielt werden kann

Für welche Legesysteme ein ummaschter Draht eingesetzt wird, hängt vor allem vom vorgesehenen Einsatzgebiet und von den geforderten Schnittschutzeigenschaften ab.

Der in der Diebstahl- und Vandalismus-Schutzschicht mitverwendete Draht kann als massiver Draht, als Drahtgarn oder Drahtzwirn zum Einsatz kommen. Der Durchmesser dieses Drahtes soll zwischen 0,1 und 2,0 mm liegen, bevorzugt wird ein Bereich zwischen 0,2 und 0,6 mm.

Der Gewichtsanteil des Drahtes in der Maschenware hängt von einer Reihe von Faktoren ab. So kann ein relativ geringer Anteil zum Einsatz kommen, wenn zwei oder mehr Diebstahl- und Vandalismus-Schutzschichten übereinander Verwendung finden. Ein höherer Anteil wird dagegen benötigt, wenn beispielsweise die Maschenware nicht alleine aus schnittfesten Fasern hergestellt wird, sondern Mischungen von schnittfesten mit nicht schnittfesten Fasern eingesetzt werden. Deshalb kann der Gewichtsanteil des Drahtes in der erfindungsgemäßen Vandalismus-Schutzschicht in einem Bereich von 10 - 90 % liegen. Bevorzugte wird ein Bereich von 20 - 60 %.

Der Draht sollte eine Wellen- oder Spiralform aufweisen. Im Hinblick auf eine bessere Verarbeitbarkeit wird eine Wellenform` bevorzugt. Durch diese Wellenform werden drei wesentliche Vorteile erreicht.

So ist die Schnittfestigkeit einer durch Mitverwendung eines wellenförmigen Drahtes hergestellten Diebstahl- und Vandalismus-Schutzschicht wesentlich besser als bei Verwendung eines glatten Drahtes. Die bessere Schnittfestigkeit der mit gewelltem Draht hergestellten Ware ist vor allem damit erklärbar, daß ein gewellter Draht in der Diebstahl- und Vandalismus-Schutzschicht insgesamt eine größere Fläche einnimmt als ein glatter Draht. Beim Einstechen eines Messers und vor allem bei dem Versuch, dieses durch die einzuschneidende Ware zu ziehen, ist bei einem gewellten Draht die Wahrscheinlichkeit, daß das Messer auf den Draht trifft und nicht mehr weitergezogen werden kann, wesentlich größer als bei einem glatten Draht. Der Vorteil des gewellten Drahtes macht sich in ganz besonderer Weise dann bemerkbar, wenn die Maschenware aus Mischungen von schnittfesten mit nicht schnittfesten Fasern hergestellt wird.

Ein anderer Vorteil ist die bei einem wellenförmigen Draht im Vergleich zu einem glatten Draht geringere Gefahr des Herausarbeitens aus dem Verbund der Diebstahl- und Vandalismus-Schutzschicht und der Verursachung von Verletzungen. Bedingt durch seine Form ist die Wahrscheinlichkeit, daß der Draht durch die mechanischen Beanspruchungen beim Öffnen und Schließen des Verdecks nach oben durch den Oberstoff oder nach unten durch die Dachinnenverkleidung geschoben wird und aus diesen herausragt, deutlich geringer als bei einem glatten, ungewellten Draht.

Als dritter Vorteil ist bei der Verwendung eines gewellten Drahtes eine größere Flexibilität der hergestellten Maschenware und damit eine bessere Verarbeitbarkeit zu nennen.

Bezüglich der Form und der Zahl der Wellen bestehen keine besonderen Beschränkungen. Ein Langenverhältnis von 1 : 1,5 - 1 : 3,5 hat sich als günstig erwiesen. Bei den hier angegebenen Langenverhältnissen ist 1 die Länge des Drahtes in gewelltem oder spiraligem Zustand und die andere Zahl die Länge des Drahtes nach dem Strecken und Herausziehen der Struktur.

Bevorzugt wird der in der erfindungsgemäßen Diebstahl- und Vandalismus-Schutzschicht einzusetzende Draht mit einem Mantel aus Textilfasern umhüllt. Hierfür bieten sich als Möglichkeiten das Umspinnen, das Umwickeln oder das Einzwirnen des Drahtes an. Diese Methoden sind dem Fachmann bekannt. Besonders bevorzugt wird zur Herstellung der erfindungsgemäßen Diebstahl- und Vandalismus-Schutzschicht ein ummaschter Draht eingesetzt.

Zum Ummaschen wird der Draht in ein Maschengebilde eingelegt und durch zusätzliche Bildung weiterer Maschen umhüllt, so daß sich als Mantel des Drahtes eine Maschenware bildet. Durch dieses Ummaschen wird bei einem eventuellen Durchtrennen des Drahtes verhindert, daß sich der Draht durch die mechanische Beanspruchung der Diebstahl- und Vandalismus-Schutzschicht aus dieser herausarbeiten und Verletzungen verursachen kann.

Versuche haben gezeigt, daS durch die besondere Struktur der durch Ummaschen hergestellten Mantelschicht ein wesentlich höherer Schutz des Drahtes vor dem Herausstechen erreicht werden kann als bei anderen Methoden der Mantelbildung wie Umspinnen, Umwickeln oder Einzwirnen.

Zum Ummaschen des Drahtes können Garne beliebiger Fasermaterialien Einsatz finden. Im Interesse einer optimalen Schnittbeständigkeit der Diebstahl- und Vandalismus-Schutzschicht wird jedoch die Verwendung einer schnittfesten Faser, wie einer aromatischen Polyamidfaser, einer nach dem Gelspinnverfahren hergestellten Polyethylenfaser oder einer Glasfaser bevorzugt. Besonders bevorzugt wird die Verwendung einer aromatischen Polyamidfaser.

Der für die Herstellung der erfindungsgemäßen Diebstahl- und Vandalismus-Schutzschicht einzusetzende Draht kann einen Mantel eines leicht schmelzbaren Polymers enthalten. Hierfür sind alle Polymere, die als Schmelzkleber Verwendung finden können, geeignet. Beispiele solcher Polymere sind Ethylen-Vinylacetat-Copolymere, Copolyamide, Copolyester, Polyisobutylen und Polyvinylbutyrale.

Ein mit Schmelzkleber ausgerüsteter Draht wird bevorzugt in das für die Verklebung besonders vorgesehene Legesystem bei der Maschenwarenherstellung eingebracht. Die erfindungsgemäße Diebstahl- und Vandalismus-Schutzschicht kann somit sowohl mit Schmelzkleber versehenen Draht als auch Draht, der selbst keinen Schmelzkleber-Mantel hat, enthalten.

Die erfindungsgemäße Diebstahl- und Vandalismus-Schutzschicht findet für Cabrioletverdecke Anwendung. Über der Schutzschicht wird der Verdeckstoff und/oder unter der Schutzschicht die Dachinnenverkleidung angeordnet. Hierfür ist jede Art der bekannten Verdeckmaterialien geeignet Bezüglich der Faserart und der Konstruktion des textilen Flächengebildes für den Verdeckstoff oder die Dachinnenverkleidung bestehen keine Einschränkungen. Der zu wählende Verdeckstoff und die Dachinnenverkleidung sollten mit einer flammhemmenden Ausrüstung versehen oder aus einer Faser mit eingesponnenem flammhemmenden Mittel hergestellt sein.

Bei der Verwendung der erfindungsgemäßen Diebstahl- und Vandalismus-Schutzschicht in Cabrioletverdecken kommt der Art der Verbindung eine wesentliche Bedeutung zu- Eine direkte ganzflächige Verklebung der Maschenware mit dem Verdeckstoff oder der Dachinnenverkleidung ist von Nachteil. Im Interesse einer guten Schmittschutzbeständigkeit ist es wichtig, der unter dem Verdeckstoff und/oder an der Oberseite der Dachinnenverkleidung als Diebstahl- und Vandalismus-Schutzschicht angeordneten Maschenware eine gewisse Beweglichkeit zu ermöglichen, da auf diese Weise der Widerstand gegen das Einschneiden höher ist als bei einer starr bzw. ganzflächig mit dem Oberstoff verklebten Diebstahl- und Vandalismus-Schutzschicht. Mit dem erfindungsgemäßen Aufbau der Schutzschicht, die mit dem Verdeckstoff und/oder an der Oberseite der Dachinnenverkleidung über eine mit der Maschenware vernadelte Vliesschicht verbunden ist, wird die erforderliche Beweglichkeit der Schutzschicht erreicht.

Bei aus der Ebene der Maschenware herausragender Fadenlage kann ggf. ohne großen zusätzlichen Aufwand, zum Beispiel durch Auftrag eines Klebers mit Hilfe einer Walze, eine zusätzliche linienförmige Verklebung mit dem Vlies erreicht werden, ohne die erforderliche Beweglichkeit zu vermindern Die aus der Ebene der Maschenware herausragende Fadenlage enthält den Draht und die Verklebung erfolgt bevorzugt an dem drahthaltigen Fadensystem. An den drahthaltigen Stellen wird ein besserer Klebeeffekt erzielt als an den nicht drahthaltigen Stellen. Die linienförmige Verklebung bietet aber andererseits den Vorteil einer guten Trennfähigkeit, wenn beispielsweise eine Reparatur des Cabrioletverdecks, zum Beispiel ein Austauschen des Verdeckstoffes und/oder der Dachinnenverkleidung, notwendig wird.

Mit der erfindungsgemäßen Diebstahl- und Vandalismus-Schutzschicht wird ein wirksamer Schutz gegen das Aufschneiden erzielt. Darüberhinaus bietet die erfindungsgemäße Diebstahl- und Vandalismus-Schutzschicht eine Reihe weiterer Vorteile wie geringe Verletzungsgefahr beim Brechen der Drahteinlagen und gute Abtrennbarkeit der Diebstahl- und Vandalismus-Schutzschicht von der Nachbarschicht für eventuelle Reparaturarbeiten bei dennoch guter Verbindung mit den angrenzenden Schichten. Weiterhin ist bei Einsatz von aromatischen Polyamidfasern oder Glasfasern die geringe Brennbarkeit der Diebstahl- und Vandalismus-Schutzschicht ein besonderer Vorteil.

Besonders vorteilhaft läßt sich die Diebstahl- und Vandalismus-Schutzschicht in Verbindung mit dem Verdeckstoff gemäß der EP-B1 0 377 813 verwenden, der aus einem Obergewebe, einem Unterstoff und einer dazwischen angeordneten Gummierung besteht und bei den das Obergewebe aus aus Polyacrylnitril bestehenden Kett- und Schußfäden gebildet ist, zumindest die Kettfäden des Obergewebes aus Endlosfäden (Multifilaments) bestehen, das Obergewebe eine zumindest gewebeoberseitige Beschichtung aufweist, die Gummierung zwischen Obergewebe und Unterstoff zweischichtig ausgeführt ist und zwischen den Gummierungsschichten eine Zwischenlage aus im Vergleich zu den Gummierungsschichten hochfestem Material eingebettet ist.

Durch diese Merkmale werden wesentliche Vorteile in verschiedener Hinsicht erzielt. So weist dieser Verdeckstoff eine hohe Licht- und Wetterbeständigkeit auf, wie er sich auch durch eine gute Elastizität und Wärmehaltung auszeichnet. Die Maßnahme, die Kettfäden aus Endlosfäden zu bilden, trägt sowohl zur Verbesserung der Festigkeit als auch zur Verminderung der Dehnung des Verdeckstoffes bei. Durch die Beschichtung des Obergewebes, die aus einem transparenten Kunststoffmaterial bestehen kann, oder für die insbesondere ein Beschichtungsmittel auf der Basis von fluorhaltigen Polymeren, wie TFB(Tetrafluorobutylen)-Dispersionen vorgesehen sein kann, ergibt sich für den Verdeckstoff vorteilhafterweise eine besondere Qualitätsverbesserung, und zwar in bezug auf Wetterfestigkeit, geringerer Schmutzanhaftung und besserer Pflegemöglichkeit, zu der insbesondere auch eine Waschstraßenfestigkeit gehört. Ein weiterer wesentlicher Vorteil ist im erhöhten UV-Schutz zu sehen, woraus sich wiederum eine verlängerte Lebensdauer ableitet Weitere Vorteile sind gute Gleiteigenschaften, Antiadhäsivität, Hydrophobie und hohe Chemiekalienbeständigkeit. Die besonderen Vorteile der vorgesehenen Zwischenlage bestehen darin, daß der Verdeckstoff eine hohe Festigkeit bei geringerer Dehnfähigkeit erhält. Auch wird durch diese Maßnahme der oftmals zu beobachtenden Ballonbildung bei Cabriolet-Dächern (hervorgerufen durch die Druckdifferenz zwischen Fahrzeugaußen- und -innenraum bei hoher Geschwindigkeit) entgegengewirkt.

Die vorgenannten Vorteile können noch optimiert werden, wenn gemäß einer Weiterbildung der Erfindung vorgesehen wird, daß die Zwischenlage aus Fasern oder Fäden aus hochfestem Material (Tetrafluorobutylen) bestehen, wobei insbesondere an Aramid gedacht ist. Die Fasern oder Fäden können aber auch aus Kohlenstoff, Glas, Stahl oder hochverstrecktem Polyethylen bestehen.

Bevorzugterweise ist vorgesehen, daß die Zwischenlage aus einem Gittergewebe besteht, das aus Fasern oder Fäden aus im Vergleich zu den Gummierungsschichten hochfestem Material, vorzugsweise Aramidfäden gebildet ist. Dabei besteht eine Weiterbildung noch darin, daß die Kett- oder Schußfäden des Gittergewebes in einem Winkel zwischen 30° und 60°, vorzugsweise 45° zur Gewebelängsachse verlaufen. Damit wird der Verdeckstoff isotrop, d. h. gleich dehnbar in Längs-, Quer- und Diagonal-Richtung. Ein Zerschneiden des Verdeckstoffes wird damit zusätzlich erschwert und zudem wird einer Ermüdung des Verdeckstoffes entgegengewirkt.

In weiterer Ausgestaltung ist vorgesehen, daß der Unterstoff aus einem, zumindest überwiegend aus synthetischen Fasern oder Fäden gebildeten Gewebe oder Gewirke besteht. Hierdurch wird der Vorteil einer relativ hohen Scheuerfestigkeit erzielt, was besonders bei automatisch aus- und einfahrenden Cabriolet-Verdecken von enormer Wichtigkeit ist, weil hier eine erhöhte Verschleißbeanspruchung besteht. Durch den Unterstoff ergibt sich auch die Möglichkeit einer farblichen Anpassung des Verdeckstoffs an die jeweilige Fahrzeuginnenausstattung.

Wenn im Obergewebe, in der Zwischenlage oder im Unterstoff sowie in der Diebstahl- und Vandalismus-Schutzschicht Fasern, Fäden, Drähte oder Folienstreifen aus elektrisch leitendem Material eingelagert sind, wird sichergestellt, daß auch ein Cabriolet als "Faradayscher Käfig" zu wirken vermag. Zudem wird durch diese Maßnahme die Möglichkeit eröffnet, daß das Verdeck mit einer, einen erhöhten Diebstahlschutz bietenden Alarmanlage verbindbar ist.

Vorzugsweise ist das Obergewebe imprägniert (Tauchbeschichtung), und zwar insbesondere mit TF(Tetraflouro)-Dispersionen, die im Handel z. B. unter der Bezeichnung "Hostaflon" erhältlich sind.

## Patentansprüche

1. Verdeck für Fahrzeuge, insbesondere Cabriolets, mit einem Verdeckstoff aus
- einem Obergewebe,
- einem Unterstoff,
- einer dazwischen angeordneten Gummierung und
- einer am Unterstoff angeordneten Schutzschicht aus
- einer Maschenware aus schnittfesten Fasern wie aromatischen Polyamidfasern, nach dem Gelspinnverfahren ersponnenen Polyethylenfasern oder Glasfasern,
- einem Draht in mindestens einem Fadensystem der Maschenware und
- einer wenigstens einseitig auf die Schutzschicht aufgebrachten textilen Vliesschicht.

2. Verdeck für Fahrzeuge, insbesondere Cabriolets, mit einem Verdeckstoff, einer unterhalb des Verdeckstoffs anzuordnenden Dachinnenverkleidung und
- einer an der Oberseite der Dachinnenverkleidung angeordneten Schutzschicht aus
- einer Maschenware aus schnittfesten Fasern wie aromatischen Polyamidfasern, nach dem Gelspinnverfahren ersponnenen Polyethylenfasern oder Glasfasern,
- einem Draht in mindestens einem Fadensystem der Maschenware und
- einer wenigstens einseitig auf die Schutzschicht aufgebrachten textilen Vliesschicht.

3. Verdeck für Fahrzeuge, insbesondere für Cabriolets, mit einem Verdeckstoff aus
- einem Obergewebe,
- einem Unterstoff,
- einer dazwischen angeordneten Gummierung,
- einer unterhalb des Verdeckstoffs anzuordnenden Dachinnenverkleidung,
- einem zwischen dem Verdeckstoff und der Dachinnenverkleidung angeordneten Klappmechanismus (Spriegel) und
- je einer am Unterstoff des Verdeckstoffs sowie an der Oberseite der Dachinnenverkleidung angeordneten Schutzschicht aus
- einer Maschenware aus schnittfesten Fasern wie aromatischen Polyamidfasern, nach dem Gelspinnverfahren ersponnenen Polyethylenfasern oder Glasfasern,
- einem Draht in mindestens einem Fadensystem der Maschenware und
- einer wenigstens einseitig auf die Schutzschicht aufgebrachten textilen Vliesschicht.

4. Verdeck nach Anspruch 1, 2 oder 3, **dadurch gekennzeichnet,** daß die Vliesschicht mit der Maschenware vernadelt ist.

5. Verdeck nach Anspruch 1, 2, 3 oder 4, **gekennzeichnet durch** eine Vliesschicht aus schnittfesten Fasern wie aromatischen Polyamidfasern, nach dem Gelspinnverfahren ersponnenen Polyethylenfasern oder Glasfasern.

6. Verdeck nach Anspruch 1, 2, 3, 4 oder 5, **dadurch gekennzeichnet,** daß der Verdeckstoff oder die Dachinnenverkleidung mit der Vliesschicht verklebt ist.

7. Verdeck nach Anspruch 6, **dadurch gekennzeichnet**, daß die Vliesschicht mit einer dauerhaftfähigen Kleberschicht und einer abziehbaren Schutzfolie versehen ist.

8. Verdeck nach Anspruch 7, **gekennzeichnet durch** beidseitig auf die Schutzschicht aufgebrachte Vliesschichten und eine dauerhaftfähige Kleberschicht sowie eine abzienbare Schutzfolie auf wenigstens einer Vliesschicht.

9. Verdeck nach einem oder mehreren der Ansprüche 1 bis 8, **dadurch gekennzeichnet,** daß der Draht mindestens in einem aus der Ebene der Maschenware herausragenden Fadensystem enthalten ist.

10. Verdeck nach einem oder mehreren der Ansprüche 1 bis 9, **dadurch gekennzeichnet,** daß die Maschenware eine Kettenwirkware ist.

11. Schutzschicht nach einem oder mehreren der Ansprüche 1 bis 9, **dadurch gekennzeichnet,** daß die Maschenware eine Raschelware ist.

12. Verdeck nach einem oder mehreren der Ansprüche 1 bis 9, **dadurch gekennzeichnet**, daß die Maschenware eine Häkelgalonware ist.

13. Verdeck nach einem oder mehreren der Ansprüche 1 bis 12, **dadurch gekennzeichnet**, daß der in mindestens einem Fadensystem enthaltene Draht einen Durchmesser von 0,1 - 2,0 mm aufweist.

14. Verdeck nach einem oder mehreren der Ansprüche 1 bis 13, **dadurch gekennzeichnet,** daß der in mindestens einem Fadensystem enthaltene Draht einen Durchmesser von 0,2 - 0,6 mm aufweist.

15. Verdeck nach einem oder mehreren der Ansprüche 1 bis 14, **dadurch gekennzeichnet,** daß der Draht gewellt oder spiralförmig ist.

16. Verdeck nach einem oder mehreren der Ansprüche 1 bis 15, **dadurch gekennzeichnet,** daß der Draht mit einer Maschenware aus textilem Garn ummascht ist.

17. Verdeck nach einem oder mehreren der Ansprüche 1 bis 15, **dadurch gekennzeichnet,** daß der Draht mit einem leicht schmelzbaren Polymer ummantelt ist.

18. Verdeck nach einem oder mehreren der Ansprüche 1 bis 15, **dadurch gekennzeichnet,** daß der Draht mit einem leicht schmelzbaren Polymer ummantelt und mit einer Maschenware aus textilem Garn ummascht ist.

19. Verdeck nach einem oder mehreren der Ansprüche 1 bis 18, **dadurch gekennzeichnet,** daß das Obergewebe aus aus Polyacrylnitril bestehenden Kett- und Schußfäden gebildet ist, daß zumindest die Kettfäden des Obergewebes aus Endlosfäden (Multifilaments) bestehen, daß das Obergewebe eine zumindest gewebeoberseitige Beschichtung aufweist, daß die Gummierung zwischen Obergewebe und Unterstoff zweischichtig ausgeführt ist und daß zwischen den Gummierungsschichten eine Zwischenlage aus im Vergleich zu den Gummierungsschichten hochfestem Material eingebettet ist.

20. Verdeck nach Anspruch 19, **dadurch gekennzeichnet,** daß das Obergewebe zumindest gewebeoberseitig mit transparentem Kunststoffmaterial beschichtet ist

21. Verdeck nach Anspruch 19 oder 20, **dadurch gekennzeichnet,** daß eine Beschichtung mit Beschichtungsmitteln auf der Basis von fluorhaltigen Polymeren, wie TFB(Tetrafluorobutylen)-Dispersionen vorgesehen ist.

22. Verdeck nach wenigstens einem der Ansprüche 19 bis 21, **dadurch gekennzeichnet,** daß die Zwischenlage aus Fasern oder Fäden aus im Vergleich zu den Gummierungsschichten hochfestem Material besteht.

23. Verdeck nach Anspruch 22, **dadurch gekennzeichnet,** daß die Fasern oder Fäden aus Aramid bestehen.

24. Verdeck nach Anspruch 22, **dadurch gekennzeichnet,** daß die Fasern oder Fäden aus Kohlenstoff, Glas, Stahl oder hochverstrecktem Polyethylen bestehen.

25. Verdeck nach wenigstens einem der Ansprüche 19 bis 21, **dadurch gekennzeichnet,** daß die Zwischenlage aus einem Gittergewebe besteht, das aus Fasern oder Fäden aus im Vergleich zu den Gummierungsschichten hochfestem Material, vorzugsweise Aramidfäden gebildet ist.

26. Verdeck nach Anspruch 25, **dadurch gekennzeichnet,** daß die Kett- oder Schußfäden des Gittergewebes in einem Winkel von 30° und 60°, vorzugsweise 45° zur Gewebelängsachse verlaufen.

27. Verdeck nach wenigstens einem der Ansprüche 19 bis 26, **dadurch gekennzeichnet,** daß der Unterstoff aus einem, zumindest überwiegend aus synthetischen Fasern oder Fäden gebildeten Gewebe oder Gewirke besteht.

28. Verdeck nach wenigstens einem der Ansprüche 1 bis 27, **dadurch gekennzeichnet,** daß im Obergewebe, in der Zwischenlage oder im Unterstoff Fasern, Fäden, Drähte oder Folienstreifen aus elektrisch leitendem Material eingelagert sind.

29. Verdeck nach wenigstens einem der Ansprüche 1 bis 28, **dadurch gekennzeichnet,** daß das Obergewebe imprägniert ist.
